# FASCICULE DE BREVET EUROPEEN

(11) **EP 0 799 754 B1**
(45) Date de publication et mention de la délivrance du brevet: **22.12.1999**
(21) Numéro de dépôt: 97400719.7
(22) Date de dépôt: 28.03.1997
(51) Int. Cl.: B61L 25/04, G06K 7/08

(54) **Dispositif de détection de passage d'un mobile, tolérant aux pannes**
Fehler-tolerante Detektionsvorrichtung für die Durchfahrt eines beweglichen Gegenstandes
Fault tolerant device for the detection of the passage of a moving body

(30) Priorité: 01.04.1996 FR 9604055
(43) Date de publication de la demande: 08.10.1997
(73) Titulaire: MATRA TRANSPORT INTERNATIONAL, 75016 Paris (FR)
(72) Inventeur: Minesi, Didier, 77310 Saint-Fargeau-Ponthierry (FR)
(74) Mandataire: Fort, Jacques

(56) Documents cités:
- EP-A- 0 526 173
- EP-A- 0 570 289
- FR-A- 2 500 944

## Description

La présente invention a pour objet un dispositif de détection du passage d'un mobile en un point déterminé de son déplacement guidé le long d'une voie. Elle trouve une application particulièrement importante dans les installations de transport collectif à commande automatique.

On connaît déjà (EP-A-0 570 289) un tel dispositif de détection comprenant un ensemble d'interrogation porté par le mobile prévu pour être relié à une alimentation en énergie électrique et un répondeur passif associé à la voie, dans lequel :
l'ensemble d'interrogation a un émetteur basse fréquence, et un émetteur moyenne fréquence à fonctionnement continu lors du déplacement du mobile, ayant des antennes respectives émettant vers une zone qui est déterminée par rapport aux antennes et est traversée par le répondeur lors du déplacement et
le répondeur comprend un circuit de réception de signal à basse fréquence et un circuit de réception de signal à moyenne fréquence ayant des circuits rayonnants accordés respectifs associés de façon que l'induction, dans le circuit basse fréquence, d'un signal basse fréquence dû au passage dans la zone provoque des fermetures du circuit rayonnant moyenne fréquence du répondeur, au rythme de la basse fréquence, l'ensemble d'interrogation ayant de plus des moyens sensibles aux perturbations de l'émetteur moyenne fréquence provoquées par la fermeture du circuit rayonnant accordé moyenne fréquence du répondeur, lorsque ce dernier est dans ladite zone.

Une installation de transport collectif comporte généralement de très nombreux répondeurs répartis le long des voies et fréquemment dénommés "balises". Même en cas d'entretien régulier, il existe un risque de panne d'une balise. Une telle panne est généralement due à un composant électronique actif, plutôt qu'à une coupure d'un élément passif, tel qu'un circuit résonnant. Si une panne d'un des répondeurs répartis le long des parties courantes de la voie a des conséquences limitées, il n'en est pas de même dans le cas d'un répondeur situé dans une station. En effet un tel répondeur est souvent utilisé non seulement pour détecter le passage d'un mobile, mais aussi pour vérifier que le mobile s'arrête à un emplacement bien déterminé, pour lequel le répondeur est dans la zone mentionnée plus haut. Si un répondeur ne fournit aucune réponse lors d'un passage en station, il n'y a souvent pas d'autre solution possible que d'omettre l'arrêt du mobile à cette station, surtout lorsque les quais sont séparés de la voie par une paroi munie de portes qui ne s'ouvrent que lorsque le mobile est arrêté dans une position bien déterminée.

La présente invention vise à fournir un dispositif de détection plus tolérant aux pannes pouvant affecter un répondeur que les dispositifs antérieurs et fournissant une indication lorsque le fonctionnement est dégradé.

Dans ce but, l'invention propose un dispositif du type ci-dessus défini caractérisé en ce que le circuit moyenne fréquence du répondeur comporte au moins deux ensembles ayant des circuits rayonnants accordés respectifs fortement couplés entre eux et reliés chacun à un bloc logique alimenté par le circuit à basse fréquence du répondeur et qui fournit, lorsqu'il est excité, un message numérique qui provoque la fermeture du circuit rayonnant moyenne fréquence uniquement pour une valeur déterminée des bits du message numérique, les messages numériques étant différents et émis de manière asynchrone.

De telles modifications du dispositif de détection décrit dans le document EP-A-0 570 289 ne consistent pas en la simple réalisation d'une redondance par duplication. Elles utilisent des propriétés des circuits fortement couplés par voie électromagnétique. La présence, dans la zone couverte par l'antenne de l'émetteur basse fréquence, d'un seul circuit rayonnant accordé sur cette basse fréquence, placé en court-circuit, réduit le courant circulant dans l'émetteur. C'est cette propriété qui est utilisée dans le dispositif suivant l'art antérieur. La juxtaposition, au premier circuit résonnant basse fréquence, d'un second circuit identique et résonnant à la même fréquence, fortement couplé avec le premier, masque presque totalement le premier circuit, vis-à-vis de l'émetteur basse fréquence lorsque les deux circuits sont fermés. Tout se passe alors comme si aucun circuit perturbateur ne se trouvait dans la zone. L'interruption de la résonnance de l'un des circuits accordés à basse fréquence "démasque" l'autre et réciproquement. En pilotant les deux circuits, accordés à la basse fréquence, de façon indépendante et asynchrone, chacun pendant une part réduite du temps, l'ensemble d'interrogation peut détecter la réponse de chacun des deux ensembles du répondeur. En cas de panne affectant l'un des ensembles, il peut encore détecter le passage du répondeur passif dans la zone. Et il peut, de plus, déceler la panne d'un des deux ensembles de sorte que l'on sait qu'il faut remettre le répondeur en l'état, sans interrompre son fonctionnement. D'autres caractéristiques encore de l'invention, avantageusement utilisables en liaison avec les précédentes, mais pouvant l'être indépendamment, apparaîtront mieux à la lecture de la description qui suit de modes particuliers de réalisation, donnés à titre d'exemples non limitatifs. La description se réfère aux dessins qui l'accompagnent, dans lesquels :
- la figure 1 est un schéma de principe d'un dispositif suivant un mode de réalisation de l'invention, dont le répondeur comprend deux ensembles ;
- la figure 2 montre un échelonnement possible des messages émis par les deux ensembles d'un dispositif du type montré en figure 1 ;
- la figure 3 est un schéma de principe montrant une disposition possible de plusieurs circuits rayonnants accordés à moyenne fréquence appartenant à un répondeur constituant une balise longue dans le sens du déplacement ; et
- la figure 4 est un schéma montrant une fraction d'un répondeur constituant une balise longue, ayant deux ensembles.

Les modes de réalisation de l'invention qui seront maintenant décrits sont en particulier applicables aux installations de transport ferroviaire dans lesquels chaque répondeur constitue une balise fixe par rapport à la voie.

Ils présentent un intérêt particulier dans le cas d'une balise située en station, dont l'absence de détection perturbe l'exploitation de l'installation.

La constitution générale de l'installation et celle de l'ensemble d'interrogation peuvent être similaires à celles décrites dans le document EP-A-0 570 289 auquel on pourra se reporter.

L'ensemble d'interrogation 10, porté par un mobile, comporte un émetteur fonctionnant en moyenne fréquence (habituellement quelques MHz) et un émetteur fonctionnant en basse fréquence (quelques dizaines à quelques centaines de kHz). L'émetteur moyenne fréquence, à fonctionnement permanent, comporte un générateur 16 alimentant un résonateur d'antenne représenté sous forme d'un cadre émissif 14 en série avec un condensateur et une résistance de charge. L'émetteur basse fréquence a une constitution similaire et comporte un générateur 26 alimentant un résonateur d'antenne représenté sous forme d'un cadre 28 en série avec une résistance de charge et un condensateur d'accord.

L'émetteur basse fréquence constitue un ensemble de télé-alimentation d'un circuit récepteur placé dans chaque répondeur et comportant une antenne de réception ayant un cadre 20 accordé à la fréquence de l'émetteur. La tension, due au couplage magnétique, qui apparaît aux bornes du condensateur d'accord 30 constitue l'alimentation de blocs logiques destinés à mémoriser des informations et à les transmettre vers l'ensemble d'interrogation.

L'émetteur moyenne fréquence de l'ensemble d'interrogation est couplé à un circuit récepteur placé dans le répondeur et utilisant une propriété des circuits à fort couplage magnétique. Alors que le dispositif décrit à titre d'exemple dans le document EP-A-0 570 289 utilise uniquement le fait que le couplage du circuit MF de l'interrogateur avec un circuit résonnant à la même fréquence réduit (lorsque ce circuit résonnant est fermé) le courant qui circule dans le circuit MF de l'interrogateur, l'invention utilise de plus le fait que la juxtaposition, à un premier circuit résonnant, d'un second circuit, identique et fortement couplé au premier, masque presque totalement l'effet du premier circuit résonnant, et réciproquement.

Pour utiliser cette propriété, le circuit récepteur moyenne fréquence comprend deux antennes 18a et 18b fortement couplées entre elles, représentées par des cadres, placées de façon à être quasi simultanément couplées au cadre 14. Les deux antennes 18a et 18b sont placées dans des circuits accordés respectifs, identiques, ayant chacun un interrupteur commandé 38a ou 38b.

L'interrupteur peut avoir diverses natures, suivant la valeur de la moyenne fréquence, la cadence des informations à transmettre et l'impédance du circuit.

Pour certaines valeurs d'impédance, un interrupteur à transistor à effet de champ est suffisant. Un transistor bipolaire à faible impédance alternativement mis en mode saturé et en mode bloqué peut être utilisé lorsque la vitesse limitée de commutation d'un tel transistor est acceptable.

Le récepteur basse fréquence comporte, en plus d'un redresseur (schématisé par une diode 54) de fourniture de la tension continue nécessaire et d'un circuit d'extraction d'horloge commune (au rythme de la basse fréquence), deux blocs logiques de même constitution, ayant chacun une mémoire morte programmable 24a ou 24b et un cadenceur 56a ou 56b.

Chaque cadenceur est prévu pour provoquer l'émission d'un message par la mémoire morte correspondante, à intervalles réguliers et espacés, lorsque le circuit basse fréquence reçoit de l'énergie par couplage magnétique.

Les cadenceurs sont rendus asynchrones, de façon à supprimer ou réduire le risque d'émission simultanée de message par les deux mémoires. Ils peuvent être couplés entre eux pour décaler leur fonctionnement. Ils peuvent également émettre, plusieurs fois, à des intervalles séparés par un nombre déterminé de périodes d'horloge, le nombre affecté à un des deux cadenceurs étant premier par rapport à l'autre. Les messages émis par les deux mémoires 24a et 24b peuvent par exemple présenter l'échelonnement indiqué sur la figure 2, où H désigne le signal d'horloge. Chaque message peut être binaire. On peut aisément, en utilisant un rapport cyclique d'émission de l'ordre de 1/10ème, émettre des messages de 100 à 200 bits, écrits dans un code correcteur d'erreur pour accroître la fiabilité. Les deux messages sont différents, de façon que l'interrogateur puisse déterminer que l'ensemble du répondeur est en état de fonctionnement. Les messages provoquent la fermeture des circuits résonnants lorsqu'un bit a la valeur 1 ou 0, et inversement. Ces messages sont récupérés par un démodulateur d'amplitude 22 couplé à l'émetteur moyenne fréquence et envoyés à un décodeur non représenté.

Une panne d'un composant passif du répondeur est peu à craindre. Dans la pratique, les pannes éventuelles surviennent sur les éléments actifs. Une telle panne a pour effet de laisser le cadre correspondant 18a ou 18b résonner en permanence ou, à l'inverse, de le maintenir en circuit ouvert, donc non résonnant. Dans le premier cas, le cadre qui résonne en permanence masque le premier lorsque ce dernier est rendu résonnant. Dans le second cas, le circuit en panne n'a plus aucun effet. Dans les deux cas, l'interrogateur continue à recevoir le message caractéristique du circuit qui est en état de fonctionnement, ce qui lui permet de détecter et d'identifier le répondeur. L'absence du second message indique à l'interrogateur qu'une panne s'est produite.

Un répondeur placé dans une station et permettant de vérifier qu'un véhicule équipé d'un interrogateur occupe à l'arrêt une position telle que l'interrogateur soit juste au-dessus soulève une difficulté supplémentaire. En effet, il n'est pas possible d'arrêter le véhicule de façon précise au-dessus d'une balise. Or la gestion des automatismes exige souvent que l'interrogateur reçoive le message caractéristique de la balise de station pendant toute la durée de stationnement au-dessus de celle-ci. La réception du message caractéristique de la balise peut être une condition pour l'ouverture des portes. Suivant un autre aspect de l'invention, celle-ci propose un dispositif dont le répondeur constitue une balise "longue" permettant d'accroître la tolérance acceptée sur le point de stationnement.

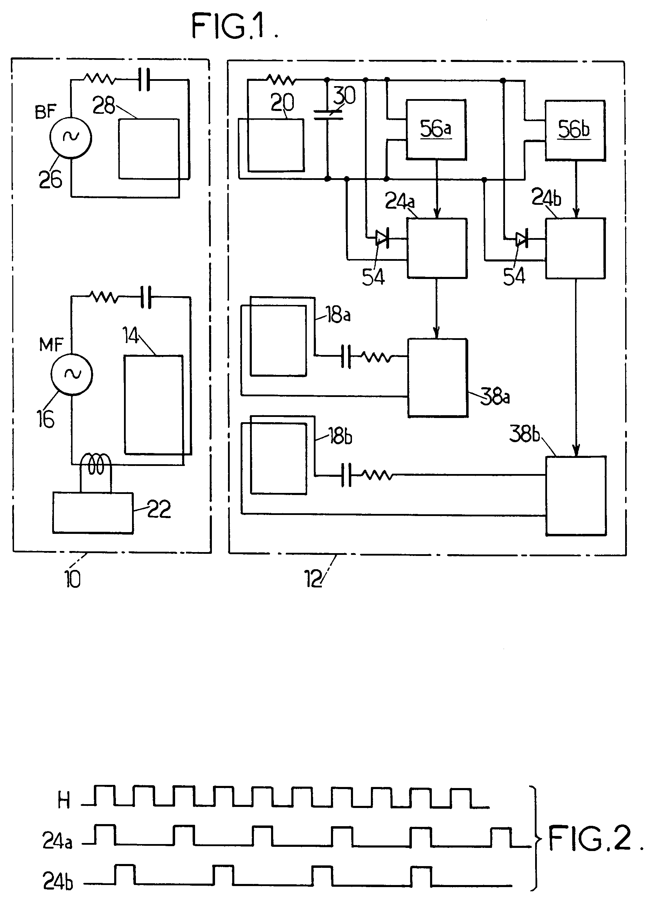

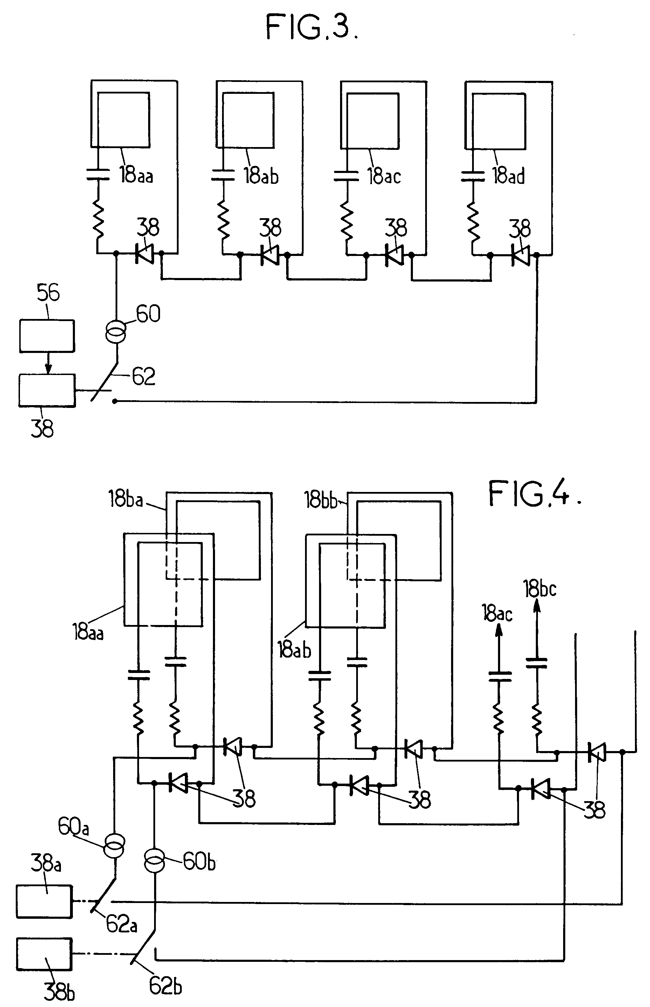

La figure 3 montre une constitution possible du circuit résonnant à moyenne fréquence du répondeur permettant d'apporter une solution au problème. Le circuit 18a de la figure 1 est remplacé par plusieurs circuits échelonnés dans le sens de déplacement 18aa, 18ab, 18ac, 18ad. Tous ces circuits doivent être pilotés c'est-à-dire mis en court-circuit de façon synchrone, afin que le message caractéristique émis soit reçu sans brouillage, quelle que soit la position de l'interrogateur au-dessus de l'un des cadres ou à cheval sur deux cadres contigus. Ce résultat est obtenu en constituant une boucle de courant, dans laquelle tous les interrupteurs de mise en court-circuit sont placés en série. La mémoire 24 est encore lue à une cadence liée à la basse fréquence. Les interrupteurs sont avantageusement constitués par des diodes 38 placés dans la boucle de courant et alimentés par une source de courant 60 dans le sens passant lorsque l'interrupteur 62 commandé par la mémoire est fermé.

Dans son application à un dispositif de détection à redondance du genre montré en figure 1, la balise peut avoir la constitution schématisée en figure 4, ou seuls deux couples de cadres sont représentés. Deux boucles de courant sont alors prévues, l'une permettant de fermer les cadres 18a, 18ab, et 18ac, l'autre permettant de fermer les cadres 18ba, 18bb, et 18bc. Chaque boucle comporte son propre générateur de courant 60a ou 60b et son interrupteur 62a ou 62b.

Les interrupteurs doivent être d'un type compatible avec la cadence d'ouverture et de fermeture requise et avec l'impédance de la boucle. Ils seront généralement constitués par des transistors, par exemple par des transistors bipolaires fonctionnant alternativement en régime bloqué et en régime saturé. Les messages peuvent être émis à la cadence de la basse fréquence, par exemple à 128 kbits/seconde. Le nombre de bits par message peut être environ 130, ce qui permet de transmettre chacun des deux numéros d'ordre (ou codes) affectés à la balise, écrit en code correcteur d'erreur permettant d'avoir une fiabilité élevée.

## Revendications

1. Dispositif de détection du passage d'un mobile en un point déterminé de son déplacement guidé le long d'une voie, comprenant, sur le mobile, un ensemble d'interrogation, prévu pour être relié à une alimentation en énergie électrique, et sur la voie, un répondeur passif, dans lequel :
l'ensemble d'interrogation a un émetteur basse fréquence, et un émetteur moyenne fréquence à fonctionnement continu lors du déplacement du mobile, ayant des antennes respectives émettant vers une zone qui est déterminée par rapport aux dites antennes et est traversée par le répondeur lors du déplacement et
le répondeur comprend un circuit de réception de signal à basse fréquence et un circuit de réception de signal à moyenne fréquence ayant des circuits rayonnants accordés respectifs associés de façon que l'induction, dans le circuit basse fréquence, d'un signal basse fréquence dû au passage dans la zone provoque des fermetures du circuit rayonnant moyenne fréquence du répondeur, au rythme de la basse fréquence, l'ensemble d'interrogation ayant de plus des moyens sensibles aux perturbations de l'émetteur moyenne fréquence provoquées par la fermeture du circuit rayonnant accordé moyenne fréquence du répondeur, lorsque ce dernier est dans ladite zone ;
caractérisé en ce que le circuit moyenne fréquence du répondeur comporte au moins deux ensembles ayant des circuits rayonnants accordés respectifs fortement couplés entre eux et reliés chacun à un bloc logique qui fournit, lorsqu'il est excité, un message numérique qui provoque la fermeture du circuit rayonnant moyenne fréquence uniquement pour une valeur déterminée des bits du message numérique, les messages numériques étant différents et émis de manière asynchrone.

2. Dispositif selon la revendication 1, caractérisé en ce que chaque bloc logique comporte une mémoire morte programmable (24a, 24b) et un séquenceur (56a, 56b), les séquenceurs étant prévus pour que les messages soient émis de façon asynchrone.

3. Dispositif selon la revendication 2, caractérisé en ce que les séquenceurs sont prévus pour émettre de façon répétitive lesdits messages, à des intervalles séparés par un nombre déterminé de périodes d'une horloge obtenue à partir du signal à basse fréquence, le nombre de périodes séparant deux messages dus à un des blocs logiques étant premier avec le nombre de périodes entre les messages dus au second bloc.

4. Dispositif selon l'une quelconque des revendications précédentes, caractérisé en ce que le circuit de réception de signal à basse fréquence comporte plusieurs circuits rayonnants accordés échelonnés dans le sens du déplacement du mobile et muni de moyens pour les fermer simultanément au rythme du message du au bloc logique associé.

5. Dispositif selon la revendication 4, caractérisé en ce que les moyens de fermeture sont formés par des diodes montées en série dans une même boucle de courant comprenant également un générateur de courant (60 ; 60a, 60b) et un interrupteur.

## Claims

1. Apparatus for detecting the passage of a moving body at a determined point in its guided displacement along a track, the apparatus comprising, on the moving body, an interrogation assembly designed to be connected to an electrical power supply, and, on the track, a passive responder, in which:
the interrogation assembly has a low frequency transmitter and a medium frequency transmitter operating continuously while the moving body is moving, each having a respective antenna transmitting towards a zone which is determined relative to the antennas and through which the responder passes during displacement; and
the responder comprises a low frequency signal receiver circuit and a medium frequency signal receiver circuit having respective tuned radiating circuits associated in such a manner that a low frequency signal induced in the low frequency circuit due to passage through the zone causes the medium frequency radiating circuit of the responder to be closed at the rate of the low frequency, the interrogation assembly further having means responsive to disturbances in the medium frequency transmitter caused by closure of the medium frequency tuned radiating circuit of the responder when the responder is in said zone;
characterized in that the medium frequency circuit of the responder includes at least two assemblies having respective tuned radiating circuits that are strongly coupled together and each connected to a respective logic unit that, when energized, delivers a digital message which causes the medium frequency radiating circuit to be closed only for bits of a determined value in the digital message, with the digital messages being different and being transmitted asynchronously.

2. Apparatus according to claim 1, characterized in that each logic unit includes a programmable read-only memory (24a, 24b) and a sequencer (56a, 56b), the sequencers being designed to ensure that the messages are transmitted asynchronously.

3. Apparatus according to claim 2, characterized in that the sequencers are designed to transmit said messages repetitively at intervals that are separated by a predetermined number of periods of a clock derived from the low frequency signal, the number of periods between two messages due to one of the logic units being prime relative to the number of periods between the messages due to the second unit.

4. Apparatus according to any preceding claim, characterized in that the low frequency signal receiver circuit includes a plurality of tuned radiating circuits that are spaced apart in the displacement direction of the moving body and that are provided with means for closing them simultaneously at the rate of the message due to the associated logic unit.

5. Apparatus according to claim 4, characterized in that the closure means are diodes connected in series in a common current loop also including a current generator (60; 60a, 60b) and a switch.

## Patentansprüche

1. Detektiervorrichtung zur Erfassung der Durchfahrt eines beweglichen Gegenstandes an einem vorgegebenen Punkt seiner entlang einer Bahn geführten Verlagerung, welche auf dem beweglichen Gegenstand eine Abfragegruppe, die zum Anschluß an eine Stromversorgung vorgesehen ist, sowie auf der Bahn einen passiven Empfänger aufweist, bei welcher:
- die Abfragegruppe einen Niederfrequenz-Sender und einen Mittelfrequenz-Sender besitzt, welcher kontinuierlich während der Verlagerung des beweglichen Gegenstandes arbeitet, und dabei jeweilige Antennen aufweist, welche zu einem Bereich hin senden, der bezüglich der Antennen vorgegeben ist und während der Verlagerung von dem Empfänger durchlaufen wird, und
- der Empfänger eine Empfangsschaltung zum Empfangen eines Niederfrequenzsignals und eine Empfangsschaltung zum Empfangen eines Mittelfrequenzsignals umfaßt, welche jeweilige abgestimmte Strahlungskreise aufweisen, die so zugeordnet sind, daß die Induktion eines niederfrequenten Signals in dem Niederfrequenzkreis infolge des Durchgangs in dem Bereich Schließungen des Mittelfrequenzkreises des Empfängers im Takt der Niederfrequenz hervorruft, wobei die Abfragegruppe des weiteren Einrichtungen besitzt, welche gegenüber Störungen des Mittelfrequenzsenders empfindlich sind, welche durch die Schließung des abgestimmten Mittelfrequenz-Strahlungskreises des Empfängers hervorgerufen werden, wenn sich letzterer in dem Bereich befindet;
**dadurch gekennzeichnet**, daß der Mittelfrequenzkreis des Empfängers mindestens zwei Baugruppen mit jeweiligen abgestimmten Strahlungskreisen aufweist, welche untereinander fest verkoppelt und jeweils mit einem Logikblock verbunden sind, welcher bei Erregung eine Meldung in numerischer Form liefert, welche die Schließung des Mittelfrequenzkreises ausschließlich bei einem vorgegebenen Wert der Bits der numerischen Meldung bewirkt, wobei die numerischen Meldungen unterschiedlich sind und in asynchroner Form ausgesendet werden.

2. Vorrichtung nach Anspruch 1, dadurch gekennzeichnet, daß jeder Logikblock einen programmierbaren Festspeicher (24a, 24b) und eine Ablaufsteuerung (56a, 56b) aufweist, wobei die Ablaufsteuerungen so vorgesehen sind, daß die Meldungen asynchron abgegeben werden.

3. Vorrichtung nach Anspruch 2, dadurch gekennzeichnet, daß die Ablaufsteuerungen so vorgesehen sind, daß sie die Meldungen wiederholt in Intervallen abgeben, welche durch eine vorgegebene Anzahl Taktperioden voneinander getrennt sind, wobei der Takt aus dem niederfrequenten Signal erhalten wird, und wobei die Anzahl der zwei Meldungen voneinander trennenden Perioden die zu einem der Logikblöcke gehören, gegenüber der Anzahl Perioden zwischen den zum zweiten Block gehörenden Meldungen die erste ist.

4. Vorrichtung nach einem der vorhergehenden Ansprüche, dadurch gekennzeichnet, daß die Empfangsschaltung zum Empfangen des niederfrequenten Signals mehrere abgestimmte Strahlungskreise umfaßt, welche in Richtung der Verlagerung des beweglichen Gegenstandes gestaffelt angeordnet und mit Einrichtungen zum gleichzeitigen Schließen im Takt der zu dem zugeordneten Logikblock gehörenden Meldung ausgerüstet sind.

5. Vorrichtung nach Anspruch 4, dadurch gekennzeichnet, daß die Schließeinrichtungen von Dioden gebildet werden, welche in Reihe in derselben Stromschleife angeordnet sind, welche des weiteren auch einen Stromerzeuger (60; 60a, 60b) und einen Unterbrecher aufweist.
